# EUROPÄISCHE PATENTANMELDUNG

(11) **EP 3 136 704 A1**
(43) Veröffentlichungstag der Anmeldung: **01.03.2017**
(21) Anmeldenummer: 15183212.8
(22) Anmeldetag: 31.08.2015
(51) Int. Cl.: H04N 5/225, G03B 13/10, G06F 3/01, H04N 13/02, H04N 13/00, H04N 21/218, H04N 21/43

(54) **KOPFEINHEIT UND SYSTEM ZUR INTERAKTIVEN ÜBERTRAGUNG VON VIDEO- UND AUDIODATEN**

(71) Anmelder: Eayse GmbH, 15732 Eichwalde (DE)
(72) Erfinder: Fiebelkorn, Richard, 15745 Wildau (DE); Vandenhouten, Ralf, Prof. Dr., 14513 Teltow (DE); Funke, Andrea, 15732 Eichwalde (DE); Constin, Peter, 12159 Berlin (DE)
(74) Vertreter: Schulz Junghans Patentanwälte PartGmbB

(57) **Zusammenfassung**

Die Erfindung betrifft eine Vorrichtung (1) zum Aufnehmen und Übertragen von Bild- und Audiodaten, aufweisend:
- ein Kopfgestell (1 a), wobei das Kopfgestell (1 a) einen Stirnbereich (2), einen ersten Seitenbereich (3) und einen zweiten Seitenbereich (4) aufweist, wobei das Kopfgestell (1a) dazu vorgesehen und ausgebildet ist, auf einen menschlichen Kopf (100) aufgesetzt zu werden, und zwar so, dass es an mindestens drei Punkten (5, 6, 7) am Kopf (100) stabilisiert ist, wobei ein erster Punkt (5) der mindestens drei Punkte (5, 6, 7) an dem ersten Seitenbereich (3), ein zweiter Punkt (6) der mindestens drei Punkte (5, 6, 7) an dem zweiten Seitenbereich (4) und ein dritter Punkt (7) der mindestens drei Punkte (5, 6, 7) am Stirnbereich des Kopfgestells (1 a) angeordnet ist,
- eine erste Kamera (8) und eine zweite Kamera (9), die in einem vordefinierten Abstand (10) entlang einer horizontalen Erstreckungsrichtung (11) des Stirnbereichs (2) an dem Stirnbereich (2) des Kopfgestells (1a) angeordnet sind,

wobei der Stirnbereich (2) im erfindungsgemäßen Zustand so auf dem Kopf (100) angeordnet ist, dass der Stirnbereich (2) in dem Bereich (101) der Augen (103) horizontal und oberhalb der Augen (103) angeordnet ist.

## Beschreibung

Die Erfindung betrifft eine auf den Kopf einer Person aufsetzbare Vorrichtung zum Aufnehmen und Übertragen von Bild- und Audiodaten gemäß Anspruch 1, sowie ein System zur interaktiven Kommunikation mit der Vorrichtung gemäß Anspruch 14.

Online Dienste wie Skype, Hangouts, oder Facetime, die Bild- und Audiodaten über ein Datennetzwerk übertragen, ermöglichen bildunterstütze Telefonate. Insbesondere ermöglichen diese Dienste ein interaktives Austauschen von Informationen zwischen einem Sender wie vor Ort und einem entfernten Empfänger.

In vielen Situationen soll sich der Sender uneingeschränkt bewegen und frei agieren können, wobei vorzugsweise immer der Blickwinkel des Senders als Bilddaten übertragen werden soll, so dass der Empfänger das gleiche sieht, wie der Sender.

Die oben genannten Dienste senden und empfangen die Bilddaten jedoch in eingeschränkter Qualität, nämlich als zweidimensionalen Videostream und mit reduzierter Bandbreite.

Eine realistische Darstellung der Begebenheiten vor Ort kann als so nicht gewährleistet werden. Ohnedies ist es unter Umständen problematisch mit einem zweidimensionalen Bilddatensatz die Gegebenheiten vor Ort realistisch darstellen zu wollen - aufgrund der fehlenden dreidimensionalen Information.

Derzeit werden insbesondere Präsentationen in Form von Fotos oder Videos angeboten, um beispielsweise eine Wohnung oder ein Haus im Internet zu präsentieren.

Der Grad der Aufarbeitung oder Verfälschung des Bildmaterials ist dabei für den Betrachter nicht ersichtlich, beispielsweise ist der Eindruck von Hotelzimmern auf Buchungsportalen immer durch Fotoauswahl und/oder Nachbearbeitung idealisiert verfälscht.

Zwar gibt es bereits Kameras, und Systeme zur Aufnahme und Wiedergabe von dreidimensionalen Bilddaten, allerdings schränken diese System den Sender in seinem Aktionsradius ein, und es ist bisher nicht möglich einen dreidimensionalen Videostream in nahezu Echtzeit mit diesen Systemen zu übertragen, geschweige denn ist eine Interaktionsmöglichkeit des Empfänger mit dem Sender vorgesehen.

Alternativen existieren nur in Form von Vorrichtungen, die dezidiert für eine zweidimensionale Bilddatenübertragung ausgelegt sind, wie beispielsweise die aufsetzbare Kamera-Brille "Google Glass". Für Google Glass existiert allerdings auch kein übergreifender Service für das Verbindungsmanagement zwischen Sender und Empfänger. Google Glass kann via Bluetooth oder WLAN mit einem Mobilfunkgerät verknüpft werden und über dieses die Daten fernübertragen werden, wenn der Empfänger bekannt ist und direkt angewählt wird.

Außerdem beinhaltet jede Brillenlösung eine Einschränkung im Sichtfeld des Senders.

Bisher gibt es keine Lösung, die die folgenden Eigenschaften und Funktionsmerkmale in sich vereint:
- Keine physische Einschränkung auf Seiten des Senders.
- Interaktionsmöglichkeit für Sender und Empfänger in Form von Bild- und Tonübertragung.
- Kommunikationsmanagement (Verbindungskontrolle, Kundenmanagement, Transcoding, Bereitstellung zusätzlicher Informationen etc.) über einen zentralen Server.

Die Aufgabe der Erfindung ist daher, eine Vorrichtung bereitzustellen, mit der eine realistisch erscheinende Präsentation von Objekten oder Gegebenheiten vor Ort erreicht werden kann, wobei die Vorrichtung ferner dazu ausgebildet sein sollte, dreidimensionale Bilddatensequenzen zu erzeugen, sowie eine Interaktion mit einem Empfänger in Echtzeit zuzulassen und einen Träger der Vorrichtung in seinem Aktionsradius nicht einzuschränken.

Das erfindungsgemäße Problem wird durch eine aufsetzbare Vorrichtung zum Aufnehmen und Übertragen von Bild- und Audiodaten gemäß Anspruch 1, sowie durch ein System zur interaktiven Kommunikation mit der Vorrichtung gemäß Anspruch 14 gelöst. Vorteilhafte Ausgestaltungen der Erfindung sind in den Unteransprüchen angegeben und werden nachfolgend beschrieben.

Danach ist vorgesehen, dass die Vorrichtung zum Aufnehmen und Übertragen von Bild- und Audiodaten, zumindest die folgenden Komponenten aufweist:
- ein Kopfgestell, wobei das Kopfgestell einen Stirnbereich, einen ersten Seitenbereich und einen zweiten Seitenbereich aufweist, wobei das Kopfgestell dazu vorgesehen und ausgebildet ist, es auf einen menschlichen Kopf aufzusetzen, und zwar so, dass es an mindestens drei Punkten am Kopf Halt findet, wobei ein erster Punkt der mindestens drei Punkte an dem ersten Seitenbereich, ein zweiter Punkt der mindestens drei Punkte an dem zweiten Seitenbereich und ein dritter Punkt der mindestens drei Punkte am Stirnbereich des Kopfgestells angeordnet ist,
- eine erste Kamera und eine zweite Kamera, die in einem vordefinierten Abstand entlang einer horizontalen Achse an dem Stirnbereich des Kopfgestells angeordnet sind, wobei das Kopfgestell im Bereich der Augen, wenn die Vorrichtung erfindungsgemäß auf dem Kopf aufgesetzt ist, zumindest bereichsweise, insbesondere aber vollständig oberhalb der Augen und insbesondere oberhalb der Augenbrauen oder auf Höhe der Augenbrauen angeordnet ist und wobei insbesondere der Stirnbereich horizontal, und insbesondere parallel zu den Augen angeordnet ist, wobei insbesondere die erste Kamera und zweite Kamera entlang der horizontalen Erstreckungsrichtung lotrecht oberhalb der Augen angeordnet sind.

Das Kopfgestell kann auch ein Stirnband umfassen oder sein oder aber steife, stabilisierende Komponenten aufweisen.

Die erfindungsgemäße Vorrichtung erlaubt es, von einer Person auf dem Kopf getragen zu werden ohne dass der Aktionsradius eingeschränkt wird. Weiterhin ist es der Person möglich beispielsweise gleichzeitig eine Brille zu tragen, ohne dass die Vorrichtung mit dem Tragen der Brille maßgeblich interferiert. D.h. insbesondere weist die Vorrichtung im Bereich der Augen keine Komponenten auf, die im Sichtfeld der Person liegen. Wobei insbesondere die Nase nicht mehr zum Bereich der Augen gezählt wird.

Durch die erste und zweite Kamera und deren spezielle Anordnung, wird erreicht, dass ein dreidimensionales Bild oder eine dreidimensionale Bildsequenz entsprechend zumindest einem Teil des Sichtfelds der Person aufnehmbar ist, so dass die örtlichen Gegebenheiten im Sichtfeld der Person durch Bilddaten erfassbar sind. In diesem Kontext sind Bilddaten auch Videodaten.

Insbesondere handelt es sich bei der ersten und zweiten Kamera um digitale Kameras, die digitale Bilddaten aufnehmen und ausgeben.

Durch die erfindungsgemäße Vorrichtung sind die Hände einer Person, welche die erfindungsgemäße Vorrichtung auf dem Kopf trägt, nicht mit dem Halten oder Ausrichten der Vorrichtung beaufschlagt, sondern können wie gewohnt mit der Umgebung interagieren.

Der erste und zweite Seitenbereich des Kopfgestells, erstrecken sich beim erfindungsgemäßen Tragen der Vorrichtung auf dem Kopf an den Seiten des Kopfes in Richtung Ohren.

Das Kopfgestell kann aus bekannten Materialien, wie beispielsweise Polymeren, Metall gefertigt sein oder diese zumindest enthalten.

Die Seitenbereiche des Kopfgestells bilden insbesondere die Schenkel des insbesondere u-förmigen Kopfgestells, wobei der Stirnbereich die beiden Seitenbereiche verbindet.

Das Kopfgestell kann einstückig aus einem Fertigungsmaterial geformt sein oder aber aus verschiedenen Teilen zusammengesetzt oder zusammensetzbar sein.

Die mindestens drei Punkte, an denen das Kopfgestell am menschlichen Kopf abstützbar ist, dienen dazu, dass die Vorrichtung einerseits komfortabel und andererseits ohne herunter zu rutschen auf dem Kopf einer Person tragbar ist - insbesondere auch, wenn die Person den Kopf geneigt hält.

Es ist anzumerken, dass der dritte Punkt der mindestens drei Punkte durchaus unterhalb der Augenbrauen angeordnet sein kann. Seine abstützende Funktion wird aber auf den Stirnbereich, der oberhalb der Augenbrauen verläuft, übertragen - beispielsweise durch einen Steg.

Bei der erfindungsgemäßen Vorrichtung ist es insbesondere möglich, dass ein Teil des Stirnbereichs unterhalb der Augenbrauen verläuft, wobei dieser Bereich insbesondere nicht oberhalb des Bereichs der Augen liegt, sondern beispielsweise im Bereich der Nase.

Im erfindungsgemäßen Zustand sind die erste und die zweite Kamera oberhalb oder auf Höhe der Augenbrauen angeordnet.

Gemäß einer Ausführungsform der Erfindung, liegt der Stirnbereich der Vorrichtung, vollständig außerhalb, insbesondere oberhalb, des Sichtfeldes oder auch Sehfeldes der Person, wenn die Vorrichtung im erfindungsgemäßen Zustand auf dem Kopf getragen wird.

Das Sichtfeld durch den Raumwinkel gegeben, den die Person mit Ihren Augen erfassen kann, ohne den Kopf zu bewegen.

Dies ist insbesondere vorteilhaft, da dadurch das Sehfeld der Person nicht eingeschränkt wird und somit die Vorrichtung sich nicht störend auf die Person auswirkt.

Die Anwendungsgebiete der Vorrichtung umfassen dabei beispielsweise, Präsentationen, wie Schulungszwecke, Vorführungen über das Internet, Vertretende Teilnahme an Events, um nur einige Anwendungsgebiete aufzuzählen.

In einer weiteren Ausführungsform der Erfindung ist vorgesehen, dass die erste Kamera und die zweite Kamera jeweils direkt insbesondere senkrecht oberhalb eines Auges der Person angeordnet sind, wenn die Vorrichtung im erfindungsgemäßen Zustand auf dem Kopf getragen wird.

Diese Anordnung ist vorteilhaft, da dreidimensionale Bilder oder Bildfolgen, beispielsweise aus den Bilddaten der ersten und zweiten Kamera errechnet werden. Damit ein natürlich erscheinender 3D-Effekt entsteht, sind die Kameras vorzugsweise im Augenabstand anzuordnen, was durch die erfindungsgemäße Anordnung gewährleistet ist.

Gemäß einer weiteren Ausführungsform der Erfindung sind die erste Kamera und die zweite Kamera in einem vordefinierten Abstand von 5 cm bis 8 cm, bevorzugt in einem vordefinierten Abstand von 6 cm bis 7 cm, insbesondere in einem vordefinierten Abstand von 6,3 cm angeordnet.

Dieser Abstand ist besonders vorteilhaft zur Erzeugung von natürlich erscheinenden dreidimensionalen Bilddaten, die aus zwei Bilddatensätzen der ersten und zweiten Kamera erzeugt werden.

Der Abstand von 6,3 cm entspricht dem durchschnittlichen Augenabstand beim Menschen.

In einer weiteren Ausführungsform der Erfindung ist vorgesehen, dass die erste Kamera und die zweite Kamera jeweils eine optische Achse aufweisen, wobei die optischen Achsen der Kameras einen in der horizontalen Ebene liegenden Winkel von betragsmäßig kleiner als 10° einschließen, wobei die optischen Achsen der ersten Kamera und zweiten Kamera bevorzugt parallel verlaufen.

Die optischen Achsen der ersten und zweiten Kamera verlaufen dabei insbesondere vertikal parallelversetzt entlang der optischen Achsen der Augen.

Zur Erzeugung von dreidimensionalen Bildern oder Bildfolgen gibt es verschiedene Verfahren, wobei bei einem Verfahren die optischen Achsen der Kameras grundsätzlich parallel verlaufen, während in einem anderen Verfahren zur Erzeugung von dreidimensionalen Bildern die Position von Objekten im Bezug auf die Bildschirmebene des dreidimensionalen Bildes durch den Winkel der Kameras vorgegeben ist.

Beide Verfahren sind vorteilhaft für die Erfindung anwendbar.

Gemäß einer weiteren Ausführungsform der Erfindung ist vorgesehen, dass der erste Seitenbereich und der zweite Seitenbereich als Brillenbügel ausgeformt sind, und der erste Punkt und der zweite Punkt des Kopfgestells über und/oder hinter den Ohren der Person liegt, wenn die Vorrichtung im erfindungsgemäßen Zustand auf dem Kopf getragen wird.

Diese Ausführungsform ist vorteilhaft, da hierdurch eine besonders hohe Tragestabilität der Vorrichtung erreicht wird und die Vorrichtung somit insbesondere stabiler auf den Kopf einer Person aufsetzbar ist.

In einer vorteilhaften Ausführungsform der Erfindung liegen der erste Seitenbereich und der zweite Seitenbereich jeweils an einem hinteren Abschnitt des jeweiligen Seitenbereichs hinter dem Ohr am Kopf an, wobei der jeweilige hintere Abschnitt insbesondere ein Polster aufweist, und wobei das jeweilige Polster vorzugsweise am Übergang vom Schädel zur Nackenmuskulatur anliegt.

Diese Ausführungsform vereint in vorteilhafter Weise eine erhöhte Tragestabilität mit einem erhöhten Tragekomfort. Dies ist insbesondere vorteilhaft, da die erfindungsgemäße Vorrichtung insbesondere schwerer ist als eine herkömmliche Brille.

So gewährt beispielsweise das Polster einen erhöhten Tragekomfort der Vorrichtung. Das Polster kann dabei aus einem Schaumstoff oder einem anderen weichen Stoffmaterial gefertigt sein.

Gemäß einer weiteren bevorzugten Ausführungsform der Erfindung liegt der dritte Punkt des Kopfgestells am Ansatz des Nasenbeins auf, wenn die Vorrichtung erfindungsgemäß auf dem Kopf aufgesetzt ist.

Insbesondere kommt beim erfindungsgemäßen Gebrauch der Vorrichtung der dritte Punkt so am Nasenbein zum Liegen, dass er oberhalb eines Brillen-Nasenbügels einer Brille liegt, wenn die Brille beispielsweise gleichzeitig zur Vorrichtung getragen wird. Insbesondere interferiert der dritte Punkt in dieser Ausführungsform nicht mit einer potenziell gleichzeitig getragenen Brille.

In einer weiteren Ausführungsform der Erfindung, weist der Stirnbereich einen längenverstellbaren Auflagesteg auf, wobei der Auflagesteg an einem unteren Rand des Stirnbereichs mittig angeordnet ist oder angeformt ist, und wobei der Auflagesteg dazu ausgebildet und vorgesehen ist, die Höhe des Stirnbereichs über den Augen einer Person anzupassen, wenn die Vorrichtung im erfindungsgemäßen Zustand auf dem Kopf getragen wird, wobei der dritte Punkt auf dem Auflagesteg liegt und wobei der dritte Punkt insbesondere an einem Ende des Auflagestegs liegt.

Der längenverstellbare Auflagesteg kann in vorteilhafter Weise dazu verwendet werden, die Position der Vorrichtung auf dem Kopf einer Person an die individuelle Kopfform anzupassen, insbesondere die Höhe des Stirnbereichs oberhalb der Augenbrauen der Person einzustellen.

In einer weiteren Ausführungsform der Erfindung ist vorgesehen, dass der Stirnbereich und/oder der erste Seitenbereich sowie der zweite Seitenbereich orthogonal zur Erstreckungsrichtung des jeweiligen Bereichs der Vorrichtung eine dreieckige oder viereckige Querschnittskontur aufweisen.

Diese Querschnittskonturen verleihen dem Kopfgestell eine zusätzliche Steife, dabei können die jeweiligen Bereiche des Kopfgestells massiv oder hohl ausgestaltet sein.

In einer weiteren Ausführungsform der Erfindung weist die Vorrichtung ein Audiomittel auf, das dazu ausgebildet ist, sowohl Audiosignale aufzunehmen und in Audiodaten umzuwandeln als auch Audiodaten in Audiosignale umzuwandeln und wiederzugeben.

Ein solches Audiomittel weist beispielsweise ein Mikrofon zur Aufnahme von Audiosignalen sowie einen Kopfhörer zur Wiedergabe von Audiosignalen auf, die insbesondere von einem Empfänger kommen, wobei der Empfänger so beispielsweise Anweisungen oder Fragen bezüglich der Umgebung, in der sich der Sender aufhält hat an den Sender übermitteln kann. Die Audiodaten sind dabei insbesondere digitale Daten.

Auf diese Weise ist eine Telekommunikation des Sender, der die Vorrichtung trägt, und des Empfängers gewährleistet.

In einer besonders bevorzugten Ausführungsform der Erfindung, weist die Vorrichtung ein Funkmittel auf, das dazu ausgebildet und vorgesehen ist, die Bilddaten der ersten Kamera und die Bilddaten der zweiten Kamera und insbesondere die Audiodaten des Audiomittels als elektromagnetisches Funksignal zu senden, sowie insbesondere Funksignale zu empfangen, insbesondere Funksignale in denen Audiodaten für das Audiomittel enthalten sind.

Diese Variante der Erfindung ist in besonderer Weise dazu geeignet, eine Ferndatenübertragung zu gewährleisten. Das Funkmittel ist dabei beispielsweise eine Internetverbindung z.B. über Wireless LAN oder eine Mobilfunkverbindung. Die Bilddaten der Kameras, werden dabei insbesondere vorverarbeitet, insbesondere so dass sich der Datenumfang der Bilddaten reduziert. Dazu kann die Vorrichtung einen dazu konfigurierten Mikrochip oder ein anderes dazu geeignetes Mittel aufweisen. Insbesondere werden die Funksignale von dem Funkmittel verschlüsselt versendet, wobei insbesondere nur der Empfänger den Dekodierungsschlüssel für die Daten besitzt.

Alternativ ist das Funkmittel dazu ausgebildet die Video- und/oder Audiodaten direkt über eine Mobilfunkverbindung zu übertragen.

In einer weiteren Ausführungsform der Erfindung ist vorgesehen, dass die Vorrichtung einen wieder aufladbaren Akku oder eine Batterie aufweist.

Dadurch muss die Vorrichtung Ihre Energie nicht über ein Stromkabel beziehen, sondern sie ist frei im Raum bewegbar.

In einer weiteren bevorzugten Ausführungsform ist vorgesehen, dass die Vorrichtung und insbesondere das Funkmittel dazu vorgesehen und ausgebildet ist, die Bilddaten und insbesondere die Audiodaten in Echtzeit zu senden und insbesondere zu empfangen und zu verarbeiten.

Echtzeit in diesem Zusammenhang bezieht sich auf die Fähigkeit der Vorrichtung, bzw. des Funkmittels, die Daten mit nur einer geringen Zeitverzögerung zu senden, so dass der Zeitversatz zwischen tatsächlicher Aufnahme und Senden des Signals, insbesondere weniger als eine Sekunde beträgt.

In einer bevorzugten Ausführungsform der Erfindung weist die Vorrichtung eine Speicherkarte auf, die dazu ausgebildet ist, die Bilddaten der ersten und zweiten Kamera aufzuzeichnen, und insbesondere auch die Audiodaten des Audiomittels, insbesondere die empfangen sowie die gesendeten Audiodaten.

In einer besonders bevorzugten Ausführungsform der Erfindung ist vorgesehen, dass die Vorrichtung weiterhin eine SIM-Karte aufweist, die dazu eingerichtet ist, Datenverkehr über einen Mobilfunkanbieter für ein mobiles Datennetz zu versenden, wobei die SIM-Karte insbesondere so in der Vorrichtung angeordnet ist, die Bilddaten und die Tondaten der Vorrichtung zu übertragen. Dabei SIM stammt dabei vom englischen subscriber identity module für "Teilnehmer-Identitätsmodul". Eine SIM Karte ist demnach eine Chipkarte, die in ein elektronisches Gerät einsteckbar ist, um die Identifikation eines Nutzers im Netz zu gewährleisten. SIM-Karten werden von Mobilfunkanbietern genutzt, um Teilnehmern, also Sendern und Empfängern, mobile Datenanschlüsse zur Verfügung zu stellen.

Die SIM-Karte kann Teil des Funkmittels sein und dient insbesondere der direkten Übermittlung der Video- und/oder Audiodaten über ein Mobilfunknetz.

In einer weiteren Ausführungsform der Erfindung ist vorgehsehen, die Vorrichtung ein globales Navigationssatellitensystem Modul, insbesondere ein GPS Modul, ein Galileo Modul und/oder ein GLONASS Modul und/oder ein Bluetooth- oder WLAN-Modul zur Nahfeldlokalisierung aufweist.

Das erfindungsgemäße Problem wird weiterhin durch ein System zur Übertragung von Bilddaten, gelöst, wobei das System zumindest die folgenden Komponenten aufweist:
- eine erfindungsgemäße Vorrichtung,
- einen Server
- einen Client,
wobei der Server dazu ausgebildet und vorgesehen ist, die Funksignale der Vorrichtung zu empfangen, zu verarbeiten und an den Client zu übertragen und wobei der Server weiterhin dazu ausgebildet und vorgesehen ist, eine Datenkommunikation zwischen der Vorrichtung dem Client herzustellen und zu unterhalten, und insbesondere Audiodaten vom Client an die Vorrichtung übertragen.

Der Client, wird in diesem Zusammenhang auch als Empfänger bezeichnet.

Dieses System löst das erfindungsgemäße Problem in vorteilhafter Weise, da es die Vorrichtung mit einem Netzwerk aus insbesondere mehreren Clients einbinden kann. Dies kann über ein spezielles Datennetzwerk oder aber auch über das Internet geschehen, wobei die Daten von der Vorrichtung beispielsweise über einen Datenempfänger in das Netz eingespeist werden, dort zum Server geleitet werden und dann weiterhin über das Netzwerk zu dem Client oder den Clients. Alternativ werden die Daten der Vorrichtung direkt (also ohne vorher über das Datennetzwerk gesendet zu werden) auf einen Server geleitet, der dann die Daten verarbeitet und über das Datennetzwerk an den oder die Clients versendet.

In einer bevorzugten Ausführungsform der Erfindung ist vorgesehen, dass der Server die Funksignale der Vorrichtung zu einem Datenstrom verarbeitet, der dreidimensionale Bilddaten enthält.

In einer weiteren Ausführungsform der Erfindung ist die Übertragungsbandbreite des Systems von der Vorrichtung zum Client so ausgebildet, dass insbesondere eine Sequenz dreidimensionaler Bilddaten umfassend mindestens 20 Bilder pro Sekunde übertragbar wird, wobei das Signal von der Vorrichtung zum Client insbesondere in Echtzeit oder mit einem Zeit-Lag von weniger als 0,2 Sekunden übertragen und decodiert wird.

Es ist weiterhin vorgesehen, dass dem Empfänger weitere Informationen, wie beispielsweise Datenblätter eingeblendet werden. Weiterhin ist in einer Variante der Erfindung vorgesehen, dass den Bilddaten zusätzlich virtuelle Objekte oder Hintergründe eingeblendet werden, was auch als augmented reality oder enhanced reality bezeichnet wird. Insbesondere ist vorgesehen, dass sogenannte Datamatrixcodes (zwei-dimensionale Barcodes) zur Konfiguration und zur Auslieferung von zusätzlichen Inhalten (z.B. Datenblätter) mit in die Bilddaten oder deren Anzeige eingeblendet werden.

Alle beschriebenen Merkmale die sich in sinnvoller Weise kombinieren lassen, können als weitere Anspruchsgrundlage dienen. Dies gilt auch für die folgende Figurenbeschreibung.

Weitere Merkmale und Vorteile der Erfindung werden nachfolgend anhand der Figurenbeschreibung von Ausführungsbeispielen erläutert. Es zeigen:
- Fig. 1: eine Frontansicht der Vorrichtung;
- Fig. 2: eine Frontansicht der Vorrichtung auf dem Kopf einer Person;
- Fig. 3: eine Seitenansicht der Vorrichtung;
- Fig. 4: eine Seitenansicht der Vorrichtung auf dem Kopf einer Person;
- Fig. 5: eine perspektivische Frontansicht der Vorrichtung;
- Fig. 6: eine perspektivische Frontansicht der Vorrichtung auf dem Kopf einer Person;
- Fig. 7: eine perspektivische Rückansicht der Vorrichtung;
- Fig. 8: eine perspektivische Rückansicht der Vorrichtung auf dem Kopf einer Person; und
- Fig. 9: eine System umfassend die Vorrichtung, einen Server und einen Client;

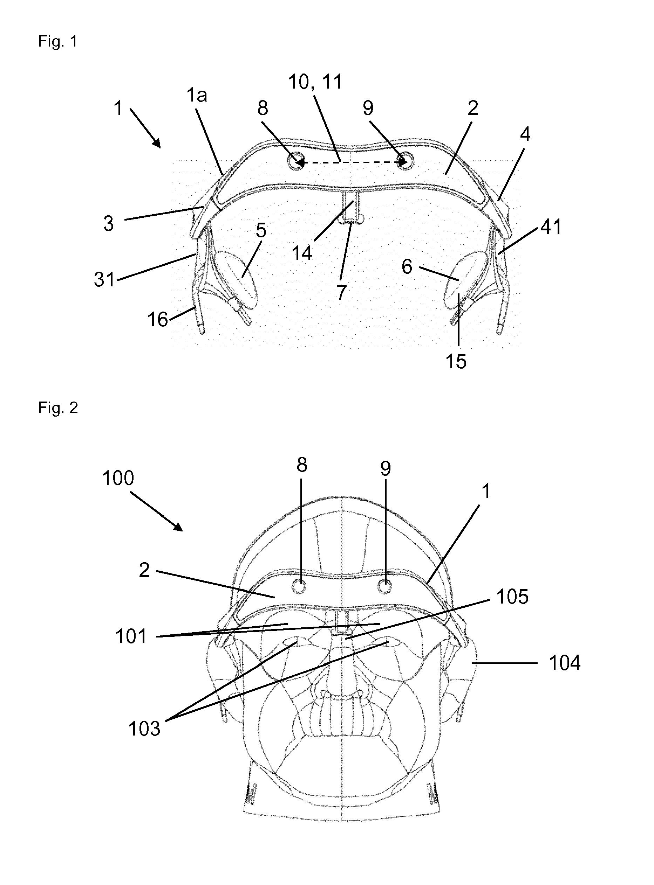

Fig. 1 bis Fig. 8 zeigen eine bevorzugte Ausführungsform der Vorrichtung 1. Dabei zeigen Fig. 1 und Fig. 2 jeweils eine Frontansicht der Vorrichtung 1, wobei in Fig. 2 zusätzlich zu Fig. 1 dargestellt ist, wie die Vorrichtung 1 im erfindungsgemäßen Zustand auf dem Kopf 100 einer Person getragen wird.

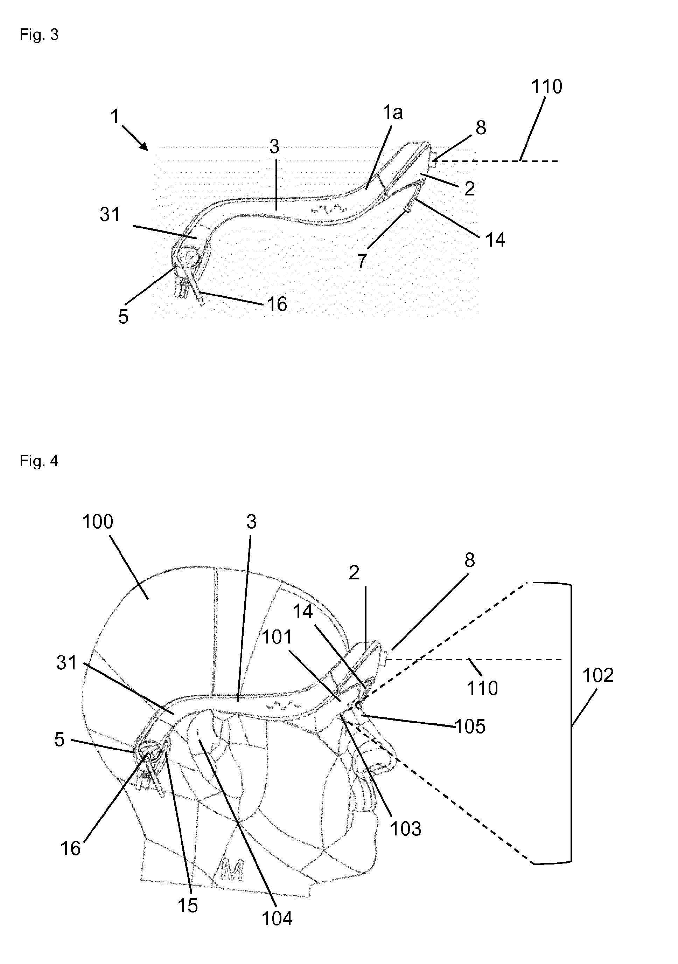

Fig. 3 und Fig. 4 zeigen jeweils eine Seitenansicht der Vorrichtung 1, wobei in Fig. 4 zusätzlich zu Fig. 3 dargestellt ist, wie die Vorrichtung 1 im erfindungsgemäßen Zustand auf dem Kopf 100 einer Person getragen wird.

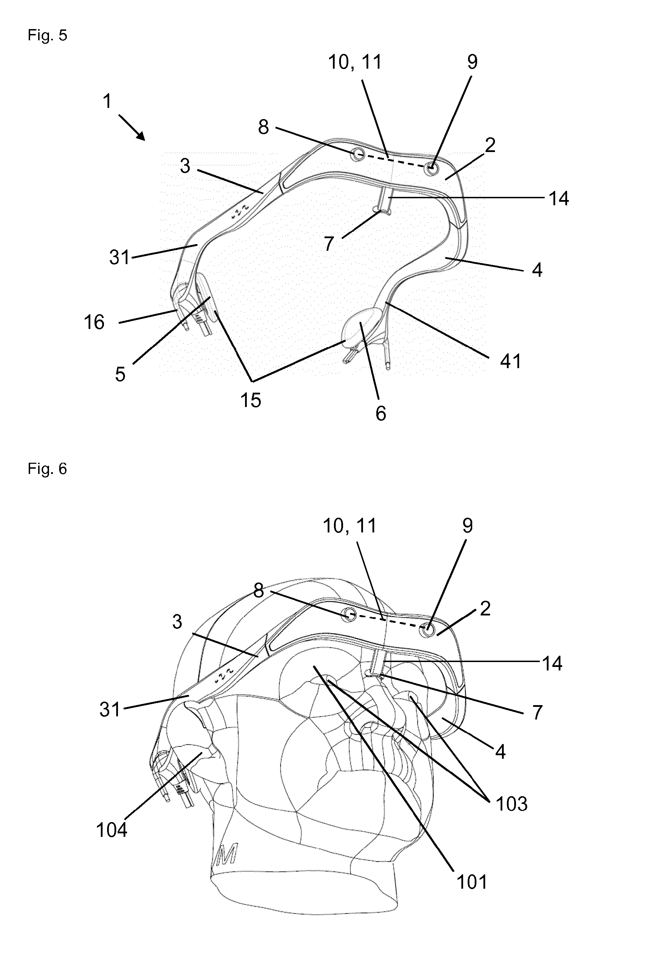

Fig. 5 und Fig. 6 zeigen jeweils eine perspektivische Frontansicht der Vorrichtung 1, wobei in Fig. 6 zusätzlich zu Fig. 5 dargestellt ist, wie die Vorrichtung 1 im erfindungsgemäßen Zustand auf dem Kopf 100 einer Person getragen wird.

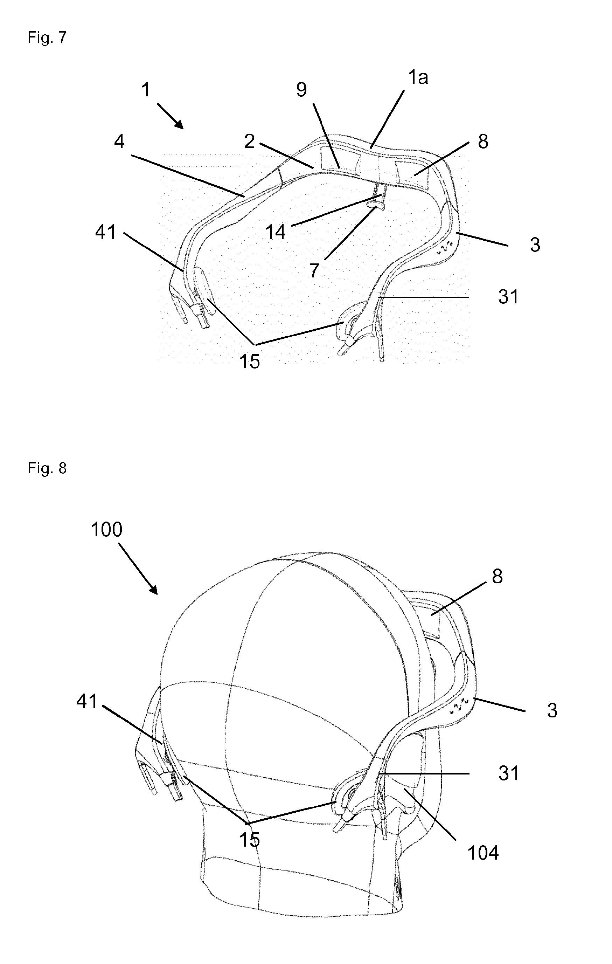

Fig. 7 und Fig. 8 zeigen jeweils eine perspektivische Rückansicht der Vorrichtung1, wobei in Fig. 8 zusätzlich zu Fig. 7 dargestellt ist, wie die Vorrichtung 1 im erfindungsgemäßen Zustand auf dem Kopf 100 einer Person getragen wird.

Die Vorrichtung 1 dargestellt in Fig. 1 bis Fig. 8 weist ein Kopfgestell 1a auf, das einen Stirnbereich 2 sowie einen ersten Seitenbereich 3 und zweiten Seitenbereich 4 aufweist. Der erste und zweite Seitenbereich 3, 4 sind an den Enden des Stirnbereichs 2 angeformt, wobei die Seitenbereiche 3, 4 mit dem Stirnbereich 2 ein U-förmiges Kopfgestell 1a ähnlich einer Brille bilden. Im Unterschied zur Brille jedoch, ist die Vorrichtung 1 dazu ausgebildet und eingerichtet, dass der Stirnbereich 2 im erfindungsgemäßen Zustand oberhalb der Augen 103 verläuft, und zwar so dass das Sichtfeld 102 der Person, welche die Vorrichtung auf dem Kopf 100 trägt, nicht eingeschränkt ist.

Der Stirnbereich 2 ist als längserstreckte Bandstruktur ausgeformt und im Unterscheid zur Brille weist er insbesondere keine durchsichtigen Bereiche auf.

Dazu weist die Vorrichtung 1 zumindest drei Punkte 5, 6, 7 auf, an denen die Vorrichtung 1 am Kopf 100 der Person abgestützt ist. Ein erster Punkt 5 und ein zweiter Punkt 6 liegen jeweils an einem der Seitenbereich 3, 4, wobei der erste und zweite Punkt 3, 4 in einem hinteren Abschnitt 31, 41 des ersten bzw. zweiten Seitenbereichs 3, 4 liegen und ähnlich wie bei einer Brille die Vorrichtung 1 am herunterrutschen vom Kopf 100 hindern, wenn die Person sich beispielsweise nach vorne beugt. Im Bereich des ersten und zweiten Punktes 3, 4 ist jeweils ein Polster 15 angebracht, das den Tragekomfort der Vorrichtung 1 erhöht. Diese Polster 15 liegen insbesondere vollständig im hinteren Bereich des Kopfes und sind am hinteren Abschnitt 31, 41 der jeweiligen Seitenbereiche 3, 4 angeordnet.

Ein dritter Punkt 7 bildet eine Stützstelle auf dem Kopf 100 für den Stirnbereich 2 der Vorrichtung 1. Die drei Punkte 5, 6, 7 sind so gewählt, dass ein stabiles und sicheres Tragen der Vorrichtung 1 auf dem Kopf 100 ermöglicht wird. Der dritte Punkt 7 liegt dazu an einem Ende eines Auflagestegs 14, der sich vom Stirnbereich 7 aus im Wesentlichen nach unten erstreckt, um eine Abstützung der Vorrichtung 1 am Ansatz des Nasenbeins 105 zu gewährleisten, und zwar so, dass das Tragen der Vorrichtung 1 nicht mit dem Tragen einer herkömmlichen Brille interferiert. Der Auflagesteg 14 ist längenverstellbar, so dass die Vorrichtung 1 individuell auf den Träger der Vorrichtung 1 angepasst werden kann. Mit dem längenverstellbaren Auflagesteg 14 wird die Höhe des Stirnbereichs 2 über den Augen 103 eingestellt, insbesondere so, dass der Stirnbereich 2 oberhalb der Augen 103 liegt. Der Auflagesteg 14 weist am Ende des dritten Auflagepunktes 7 eine Gabelung auf, die als Sattel für den Ansatz des Nasenbeins 105 dient. Die Gabelung weist dabei zumindest teilweise in Richtung des Gesichts der Person, und nicht nach unten, was ein gleichzeitiges Tragen einer Brille mit der Vorrichtung 1 gewährleistet, da der Brillensteg und der Auflagesteg 14 der Vorrichtung 1 nicht am gleichen Punkt der Nase aufsetzten.

Die Vorrichtung 1 weist eine erste digitale und eine zweite digitale Kamera 8, 9 auf, die am Stirnbereich 2 angeordnet sind, und zwar im Augenabstand 10 der Person (vorzugsweise 63 mm). Wobei der Abstand 10 über die Mitte der Optiken, bzw. den Abstand der optischen Achsen 110 der Kameras 8, 9 gemessen wird. Die Kameras 8, 9 weisen in die im Wesentlichen gleiche Richtung, so dass es möglich ist, die Bilddaten der Kameras 8, 9 zum Erzeugen von dreidimensionalen Bilddaten zu verwenden.

Die Kameras 8, 9 sind weiterhin oberhalb der Augen 103 auf dem Stirnbereich 2 angeordnet, so dass lediglich eine vertikaler Versatz der Kameras 8, 9 im Bezug zu den Augen 103 der Person vorhanden ist (jedoch keine horizontaler).

Die Kameras weisen Verstellmittel auf, mit denen insbesondere verschiedene Winkel der Kameras 8, 9 in der Vorrichtung 1 eingestellt werden können.

In den hinteren Abschnitten 31, 41 der Seitenbereiche 3, 4 weist die Vorrichtung 1 weiterhin Kopfhörer 16 als Teil eines Audiomittels auf. Die Kopfhörer 16 sind in den Abbildungen lediglich in einer Halterung für die Kopfhörer 16 an der Vorrichtung 1 dargestellt. Bei Bedarf können die Kopfhörer 16 in das Ohr gesteckt werden so dass die Audiosignale in den Gehörgang der Person übertragen werden.

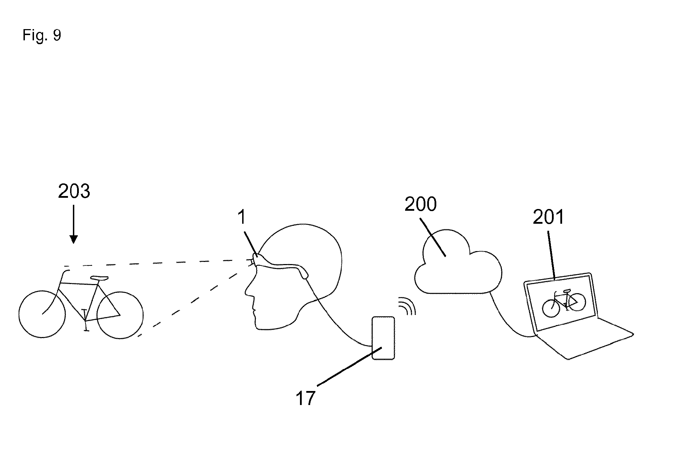

Weiterhin weist die Vorrichtung 1 zumindest ein Mikrofon (nicht eingezeichnet) auf, das Audiosignale der Person aufnehmen kann und an ein Funkmittel weiterleiten kann. Fig. 9 zeigt ein Schema, das darlegt, wie die Vorrichtung 1 im Zusammenspiel mit einem System aus Server 200 und Client 201, die Begebenheiten 203 vor Ort der Person einem Empfänger übertragen kann.

Die Vorrichtung nimmt Bilddaten mit der ersten Kamera 8 und zweiten Kamera 9 auf, und leitet diese gegebenenfalls mit Audiodaten aus dem Mikrofon der Vorrichtung 1 an ein Funkmittel 17 weiter. Das Funkmittel 17 ist in diesem Beispiel als externe Vorrichtung eingezeichnet, es ist aber ebenso möglich und ohne weiteres zu realisieren, das Funkmittel 17 in die Vorrichtung 1 zu integrieren. Das Funkmittel 17 ist dazu ausgebildet, die Bilddaten und die Audiodaten an den Server 200 zu übertragen. Dazu können die Audio- und Bilddaten nach bekannten Verschlüsselungs- und Kompressionstechniken vorverarbeitet werden. Der Server 200 sendet die empfangen Daten an den entsprechenden Client 201 weiter, der dann ein dreidimensionales Bild 204 der Begebenheiten vor Ort 203 der Person errechnen und insbesondere auch die Audiodaten wiedergeben kann. Der Empfänger kann sich also ein realitätsnahes Bild der Situation vor Ort 203 des Senders machen. Und sieht insbesondere in Echtzeit, den Bildausschnitt der Umgebung, den auch der Sender sieht. Es ist auch vorgesehen, dass Audiodaten vom Empfänger über den Client 201 zum Server 200 übertragen werden und von dort zur Vorrichtung 1. Die Vorrichtung 1 gibt diese Audiodaten über ihre Kopfhörer 16 wieder, so dass der Sender die Audiodaten des Empfängers hören kann.

Durch die Erfindung ist es gewährleitet, in Echtzeit und ohne Beeinträchtigung der Bewegungsfreiheit und des Sichtfeldes des Senders eine realitätsnahe Darstellung der Umgebung des Senders an einen Empfänger zu übertragen, insbesondere in Form von dreidimensionalen Bilddaten und Audiodaten, wobei eine Interaktion des Senders mit dem Empfänger durch den bidirektionalen Audiokanal gegeben ist.

## Patentansprüche

1. Vorrichtung (1) zum Aufnehmen und Übertragen von Bild- und Audiodaten, aufweisend:
- ein Kopfgestell (1a), wobei das Kopfgestell (1a) einen Stirnbereich (2), einen ersten Seitenbereich (3) und einen zweiten Seitenbereich (4) aufweist, wobei das Kopfgestell (1a) dazu vorgesehen und ausgebildet ist, auf einen menschlichen Kopf (100) aufgesetzt zu werden, und zwar so, dass es an mindestens drei Punkten (5, 6, 7) am Kopf (100) stabilisiert ist, wobei ein erster Punkt (5) der mindestens drei Punkte (5, 6, 7) an dem ersten Seitenbereich (3), ein zweiter Punkt (6) der mindestens drei Punkte (5, 6, 7) an dem zweiten Seitenbereich (4) und ein dritter Punkt (7) der mindestens drei Punkte (5, 6, 7) am Stirnbereich des Kopfgestells (1a) angeordnet ist,
- eine erste Kamera (8) und eine zweite Kamera (9), die in einem vordefinierten Abstand (10) entlang einer horizontalen Erstreckungsrichtung (11) des Stirnbereichs (2) an dem Stirnbereich (2) des Kopfgestells (1a) angeordnet sind,
**dadurch gekennzeichnet, dass**
der Stirnbereich (2) im erfindungsgemäßen Zustand so auf dem Kopf (100) angeordnet ist, dass der Stirnbereich (2) in dem Bereich (101) der Augen (103) horizontal und oberhalb der Augen (103) angeordnet ist.

2. Vorrichtung gemäß Anspruch 1, **dadurch gekennzeichnet, dass** der Stirnbereich (2) der Vorrichtung (1), vollständig außerhalb, insbesondere oberhalb des Sichtfeldes (102) einer Person liegt, wenn die Vorrichtung (1) im erfindungsgemäßen Zustand auf dem Kopf (100) dieser Person getragen wird und die Person insbesondere geradeaus blickt.

3. Vorrichtung gemäß einen der Ansprüche 1 oder 2, **dadurch gekennzeichnet, dass** die erste Kamera (8) und die zweite Kamera (9) jeweils entlang einer vertikalen Erstreckungsrichtung oberhalb des jeweiligen Auges (103) der Person angeordnet sind, wenn die Vorrichtung (1) im erfindungsgemäßen Zustand auf dem Kopf (100) der Person getragen wird.

4. Vorrichtung gemäß einem der vorangehenden Ansprüche, **dadurch gekennzeichnet, dass** die erste Kamera (8) und die zweite Kamera (9) in dem vordefinierten Abstand (10) von 5 cm bis 8 cm, bevorzugt in dem vordefinierten Abstand (10) von 6 cm bis 7 cm, und besonders bevorzugt in dem vordefinierten Abstand (10) von 6,3 cm angeordnet sind.

5. Vorrichtung nach einem der vorhergehenden Ansprüche, **dadurch gekennzeichnet, dass** die erste Kamera (8) und die zweite Kamera (9) jeweils eine optische Achse (110) aufweisen, wobei die optischen Achsen (110) der Kameras (8, 9) einen in der horizontalen Ebene liegenden Winkel von betragsmäßig kleiner als 10° einschließen, wobei die optischen Achsen (110) der ersten Kamera (8) und zweiten Kamera (9) bevorzugt parallel verlaufen.

6. Vorrichtung nach einem der vorhergehenden Ansprüche, **dadurch gekennzeichnet, dass** der erste Seitenbereich (3) und der zweite Seitenbereich (4) jeweils an einem hinteren Abschnitt (31, 41) des jeweiligen Seitenbereichs (3, 4) hinter einem Ohr (104) am Kopf (100) einer Person anliegen, wobei der jeweilige hintere Abschnitt (31, 41) insbesondere ein Polster (15) aufweist, und wobei das jeweilige Polster (15) vorzugsweise am Übergang vom Schädel zur Nackenmuskulatur anliegt, wenn die Vorrichtung (1) von einer Person auf dem Kopf (100) getragen wird.

7. Vorrichtung nach einem der vorhergehenden Ansprüche, **dadurch gekennzeichnet, dass** der dritte Punkt (7) des Kopfgestells am Ansatz des Nasenbeins (105) aufliegt, wenn die Vorrichtung (1) im erfindungsgemäßen Zustand auf dem Kopf (100) getragen wird.

8. Vorrichtung nach einem der vorhergehenden Ansprüche, **dadurch gekennzeichnet, dass** der Stirnbereich (2) einen insbesondere längenverstellbaren Auflagesteg (14) aufweist, wobei der Auflagesteg (14) an einem unteren Rand des Stirnbereichs (2) mittig angeordnet ist, und wobei der Auflagesteg (14) dazu ausgebildet und vorgesehen ist, die Höhe des Stirnbereichs (2) über den Augen (103) einer Person anzupassen, wenn die Vorrichtung (1) im erfindungsgemäßen Zustand auf dem Kopf (100) getragen wird, wobei der dritte Punkt (7) auf dem Auflagesteg (14) liegt und wobei der dritte Punkt (7) insbesondere an einem Ende des Auflagestegs (14) liegt.

9. Vorrichtung nach einem der vorstehenden Ansprüche, **dadurch gekennzeichnet, dass** der Stirnbereich (2) und/oder der erste Seitenbereich (3) sowie der zweite Seitenbereich (4) orthogonal zur Erstreckungsrichtung des jeweiligen Bereichs der Vorrichtung, eine dreieckige, oder viereckige Querschnittskontur aufweisen.

10. Vorrichtung nach einem der vorhergehenden Ansprüche, **dadurch gekennzeichnet, dass** die Vorrichtung ein Audiomittel aufweist, das dazu ausgebildet ist, sowohl Audiosignale aufzunehmen und in Audiodaten umzuwandeln als auch Audiodaten in Audiosignale umzuwandeln und wiederzugeben.

11. Vorrichtung nach einem der vorhergehenden Ansprüchen, **dadurch gekennzeichnet, dass** die Vorrichtung (1) ein Funkmittel (17) aufweist, das dazu ausgebildet und vorgesehen ist, die Bilddaten der ersten Kamera (8) und die Bilddaten zweiten Kamera (9) und insbesondere die Audiodaten des Audiomittels als elektromagnetisches Funksignal zu senden, sowie insbesondere Funksignale zu empfangen, insbesondere Funksignale in denen Audiodaten für das Audiomittel enthalten sind.

12. Vorrichtung nach einem der vorhergehenden Ansprüche, **dadurch gekennzeichnet, dass** die Vorrichtung (1) ein globales Navigationssatellitensystem Modul, insbesondere ein GPS Modul, ein Galileo Modul und/oder ein GLONASS Modul und/oder ein Bluetooth- oder WLAN-Modul zur Nahfeldlokalisierung aufweist.

13. Vorrichtung nach einem der vorhergehenden Ansprüche, **dadurch gekennzeichnet, dass** die Vorrichtung (1) eine SIM-Karte aufweist, die dazu eingerichtet ist, Datenverkehr, insbesondere die Bilddaten und die Audiodaten der Vorrichtung, über ein mobiles Datennetz zu versenden.

14. System zur Übertragung von Bild- und Audiodaten aufweisend
- eine Vorrichtung (1) nach einem der Ansprüche 1 bis 14,
- einen Server (200),
- einen Client (201),
wobei der Server (200) dazu ausgebildet und vorgesehen ist, Signale, insbesondere Funksignale der Vorrichtung(1), die Bilddaten umfassen, zu empfangen, zu verarbeiten und an den Client (201) zu übertragen und wobei der Server (200) weiterhin dazu ausgebildet und dazu eingerichtet ist, eine Datenkommunikation zwischen der Vorrichtung (1) dem Client (201) herzustellen und zu unterhalten, und insbesondere Audiodaten vom Client (201) an die Vorrichtung (1) zu übertragen.

15. System nach Anspruch 14, **dadurch gekennzeichnet, dass** der Server (200) die Funksignale der Vorrichtung (1) zu einem Datenstrom verarbeitet, der dreidimensionale Bilddaten enthält.
